Europäisches Patentamt

European Patent Office

Office européen des brevets

(11) Publication number: **0 070 153**
**B1**

# EUROPEAN PATENT SPECIFICATION

(45) Date of publication of patent specification: **28.01.87**

(51) Int. Cl.⁴: **G 01 N 27/26, G 01 N 33/48**

(21) Application number: **82303588.6**

(22) Date of filing: **08.07.82**

(54) **Examining cells by electrophoresis.**

(30) Priority: **09.07.81 JP 107399/81**

(43) Date of publication of application:
**19.01.83 Bulletin 83/03**

(45) Publication of the grant of the patent:
**28.01.87 Bulletin 87/05**

(84) Designated Contracting States:
**CH DE FR GB IT LI**

(56) References cited:
**GB-A-2 054 839**
**US-A-4 212 650**

(73) Proprietor: **KUREHA KAGAKU KOGYO KABUSHIKI KAISHA**
**9-11 Horidome-cho 1-chome Nihonbashi Chuo-ku**
**Tokyo (JP)**

(72) Inventor: **Yoshikumi, Chikao**
**2-19-46 Higashi**
**Kunitachi-shi Tokyo (JP)**
Inventor: **Matsunaga, Kenichi**
**3-26-1-303 Hyakunin-cho**
**Shinjuku-ku Tokyo (JP)**
Inventor: **Hayashi, Haruhisa**
**3-26-1-304 Hyakunin-cho**
**Shinjuku--ku Tokyo (JP)**
Inventor: **Oguchi, Yoshiharu**
**No. 22 Daiichi-Kurehasoh 3-10-13 Nerima Nerima-ku**
**Tokyo (JP)**

(74) Representative: **Myerscough, Philip Boyd et al**
**J.A.Kemp & Co. 14, South Square Gray's Inn**
**London, WC1R 5EU (GB)**

Courier Press, Leamington Spa, England.

## Description

This invention relates to a method for examining cells, particularly lymphocytes, by electrophoresis.

In recent years, cell electrophoresis has begun to attract attention as a means for examining cellular immunity. One method of cell electrophoresis was proposed by D. Sabolovic *et al.*, "Cell Electrophoresis: Clinical Application and Methodology", INSERM Symposium No. 11 (1979). This method necessarily takes a long time due to mannual operation to obtain results, and the method is not favourable for examining a number of living cells. As another method, a laser-Doppler method was developed by D. Steiner *et al.*, European Journal of Cancer, *15*, 1275—1280 (1979). However, no satisfactorily good resolution of an electrophoretic pattern is obtained.

US—A—4212650 discloses an in vitro diagnostic method which comprises incubating lymphocytes with a synthetic peptide of high basicity whereby the behaviour of the lymphocytes in an electric field is modified in a detectable manner, subjecting the incubation mixture to an electric field and measuring the migration speed of the lymphocytes in the electric field.

The present invention provides a method of examining lymphocytes in peripheral blood or lymphatic tissues such as the thymus, spleen or lymph nodes, comprising taking the lymphocytes to be examined from peripheral blood or lymphatic tissues of a human or animal, suspending these lymphocytes in a medium corresponding to physiological conditions at a cell concentration of 0.5 to $20 \times 10^6$ per ml and an ionic strength of 0.11 to 0.21, measuring the electrophoretic mobility of these lymphocytes, directly on the suspension thereof thus prepared, by an automatic electrophoresis apparatus and comparing the electrophoretic mobility of the lymphocytes under examination with that of lymphocytes of a standard, for example normal host-cells.

In the description which follows, reference will be made to the accompanying drawings in which:

Figure 1 shows electrophoretic mobility patterns obtained from examination of thymocytes from mice;

Figure 2 shows the results of examination of tumor weight, the delayed foot pad reaction against sheep erthrocytes, antibody productivity and *in vitro* cytotoxic activity in respect of the mice examined for Figure 1;

Figures 3 and 4 show the electrophoretic patterns obtained from thymocytes and peripheral lymphocytes, respectively, in Example 1;

Figure 5 shows the electrophoretic patterns obtained from thymocytes in Example 2;

Figures 6 and 7 show the electrophoretic patterns obtained from the thymocytes and peripheral lymphocytes, respectively, in Example 3;

Figures 8 and 9 show the electrophoretic patterns obtained from the thymocytes and peripheral lymphocytes, respectively, in Example 4;

Figure 10 shows the electrophoretic patterns obtained from lymphocytes in Example 5; and

Figure 11 shows the electrophoretic patterns obtained from the lymphocytes in Example 6.

In the invention, since the electrophoretic mobilities of lymphocytes are determined by electrophoresis with a very high degree of resolution, information which had never been obtained can be available from changes in electrophoretic patterns.

An automatic electrophoresis apparatus suitable for use in the invention typically possesses the following features:

(1) it can examine a large number of cells in a short period of time,

(2) since the average electrophoretic mobility of an individual cell can be determined by reversing the electric field, the accuracy of values measured is high,

(3) platelets, minute suspended substances such as intermingled substances, and agglomerated cells are not measured, and

(4) a medium satisfying physiological conditions (for instance an ionic strength, I, of 0.15) can be used as liquid in which cells under examination are examined.

Particularly concerning feature (4), there have been hitherto many reports on determinations under conditions differing from physiological conditions (for instance, I from 0.005 to 0.1) because of limitations in apparatus and measurement. However, it is preferable to use a liquid suspension of cells under physiological conditions for examining the living cells.

In addition, an automatic microscope apparatus for electrophoresis (Parmoquant-II, made by Karl-Zeiss Co., East Germany, hereinafter abbreviated as PQ-II) used in the Examples below may be operated so as to measure exactly the average electrophoretic mobility of each cell among a large number of cells by reversing the electric field and a mobility histogram is obtained. In the course of operation, the concentration of the cells in the specimen (aqueous suspension of the cells) is adjusted to 0.5 to $20 \times 10^6$ cells/ml. and the ionic strength of the aqueous suspension of the cells is adjusted to 0.11 to 0.21, preferably, 0.13 to 0.17. It will of course be appreciated that the lymphocytes are examined after having been taken from the human or animal body.

However, other apparatus can be used in the invention, for instance of a laser-Doppler type, a laser-grating type or a free-flowing type, so long as it fulfills the above-mentioned conditions (1) to (4).

The method of the invention using the apparatus PQ-II will now be described in more detail, for example in connection with the examination of thymocytes of a normal C3H/He mouse and a tumor (X-5563)-bearing C3H/He mouse.

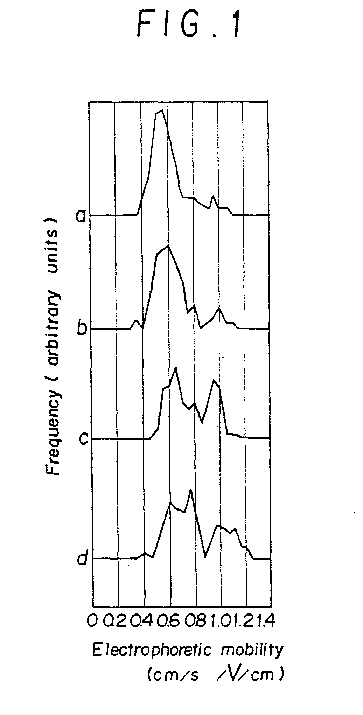

The patterns of electrophoretic mobilities obtained are shown in Figure 1 of the accompanying drawing. Pattern (a) represents a normal mouse, (b) the mouse 5 days after transplantation into the mouse of the tumor, (c) the mouse 10 days after transplantation into the mouse of the tumor and (d) the mouse 15 days after transplantation into the mouse of the tumor. The electrophoretic mobility (cm/s/V/cm) is the abscissa and the frequency (arbitrary units) is the ordinate.

As seen in Figure 1, the main peak of the pattern began to show a deformation 5 days after the transplantation. The patterns after 10 days and 15 days were quite different from that of the lymphocytes of the normal mouse.

For evaluating numerically the electrophoretic pattern, a mean value of mobilities, a mobility of a main peak, an average mobility of cells showing a mobility within a predetermined range and a fraction of the number of cells showing a mobility within a predetermined range to the total number of the cells may be used.

For instance, in Figure 1 (a) the number of cells having a mobility higher than 0.70 cm/s/V/cm, which is the boundary between the larger peak and the smaller peak, was 20.5% of the total number of the cells, while in Figure 1 (b), (c) and (d) the numbers of the cells having a mobility higher than 0.70 cm/s/V/cm were 24.2, 51.9 and 68.4%, respectively. In other words, as time passes after transplantation of tumor cells, the fraction of cells having a mobility higher than 0.70 cm/s/V/cm becomes larger by about 4—48% than the corresponding fraction for a normal mouse. The mobility of the boundary between the larger peak and the smaller peak in the electrophoretic pattern of lymphocytes, and the fraction of cells having a higher mobility than the boundary mobility in a normal animal are a little affected by the species, the strains and the age of the animal.

The average mobilities of the larger peak and the smaller peak in the electrophoretic pattern of the lymphocytes of the normal mouse shown in Figure 1 (a) were 0.52 and 0.95 cm/s/V/cm, respectively. Similarly, those of the lymphocytes of the mouse 5, 10 and 15 days after transplantation were 0.58 and 0.97 in (b), 0.62 and 0.98 in (c) and 0.68 and 1.03 in (d), respectively.

Thus, the average mobilities of both the larger peak and the smaller peak in the electrophoretic patterns of the mouse after transplantation of tumor cells shifted towards higher mobilities.

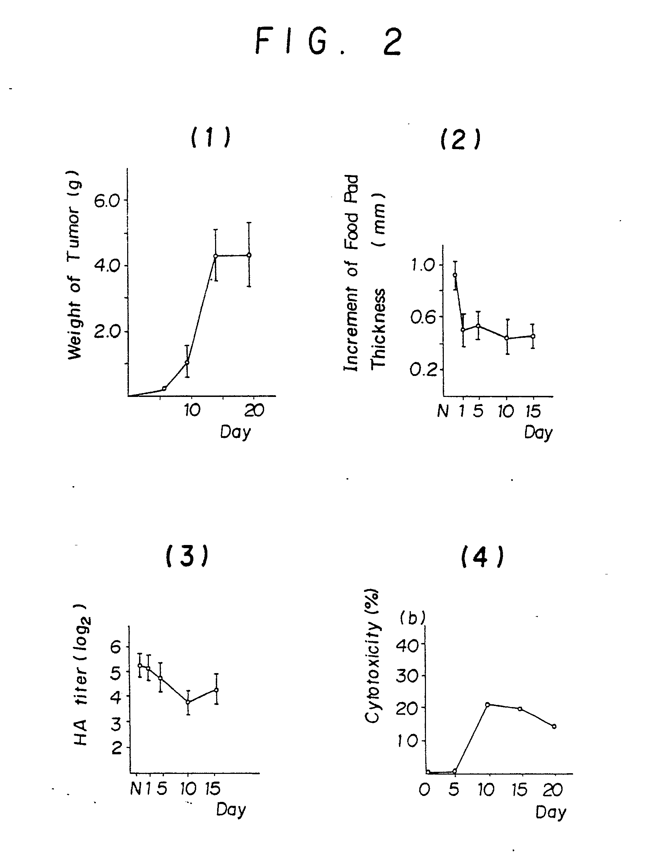

In order to compare the method of the invention with conventional methods, the results of determination of the weight of tumor, the delayed foot pad reaction against sheep erythrocytes, the productivity of antibody against sheep erythrocytes and the *in vitro* cytotoxic activity of lymphocytes against the tumor are shown in Figures 2 (1) to (4) of the accompanying drawings. In Figure 2, the days after tumor inoculation is taken as the abscissa and the weight of tumor, the increment of the foot pad thickness, the value of productivity of antibody (titer) and the cytotoxic activity of lymphocytes are taken in the ordinate of Figure 2 (1), (2), (3) and (4), respectively. As seen from Figure 2, the abnormal values appear from the 5th to 10th day, corresponding to the appearance of the change in the electrophoretic pattern.

These facts have been recognized in various experimental animal species, and the number of lymphocytes of a higher electrophoretic mobility in the tumor-bearing host increased by 4—70% as compared with that of the normal animal.

When the fraction of cells having a higher mobility in the tumor-bearing host is divided by the corresponding fraction for the normal host-cells, the ratio falls within the range of 1.05 to 8.00:1. Further, the ratio of the average mobility of a peak in the tumor-bearing host to the corresponding mobility of the normal host-cells is in the range of 1.02 to 1.60:1

The results obtained by the method of examination of the invention correspond to the results of determination of immunity by conventional methods. The method for examining cells according to the invention is, however, a superior and quicker method than the conventional methods.

In the case of the electrophoretic pattern of peripheral lymphocytes, the number of lymphocytes of the lower electrophoretic mobility in tumor-bearing host increases by 4—70% as compared with that of normal host as shown in Examples below.

When the fraction of cells having a higher mobility in the tumor-bearing host is divided by the corresponding fraction of the normal host-cells, the ratio falls within the range of 0.30 to 0.95:1. Further, the ratio of the average mobility of a peak in the tumor-bearing host to the corresponding mobility of the normal host-cells is in the range of 0.60 to 1.00:1.

The method of the invention is useful in examining immune cells not only of animals but also of human beings, particularly in diagnosing cancer.

The following Examples illustrate the invention.

Example 1

After transplanting $1 \times 10^6$ cells of Sarcoma-180 to the left axillary site of an 8 week old female ICR mouse, the mouse was sacrificed on the 25th day to extirpate the thymic cells. The cells were isolated by a pincette and passed through a mesh to be isolated. After subjecting the isolated cells to hypotonic treatment for removing erythrocytes and washing the thus treated cells twice with Eagle's MEM (minimum essential medium), the cells were suspended in Eagle's MEM at a concentration of $10^6$ to $10^7$ cells/ml.

Before extirpating the thymus, a specimen of peripheral blood was collected from the mouse, using an injector with its wall surface moistened with a solution containing 2.5 units (per ml of blood specimen) of sodium heparinate. After diluting the blood specimen with the same volume of Hanks' balanced salt solution (hereinafter abbreviated as HBSS) and mixing thoroughly, the diluted specimen was placed while forming a layer of about 5 ml on 3 ml of Ficoll-Paque solution (Grade: Ficoll 400, made by Pharmacia Fine Chemical Co., a mixed solution of sodium diatriazoate; specific gravity of 1.077) in a test tube without disturbing the interface between the two solutions. Then the contents of the test tube were subjected to centrifugation for 30 min at 400 G. The lymphocytes at the interface of the diluted specimen and the Ficoll-Paque solution were collected by a Pasteur-pipette.

The thus collected lymphocytes were washed twice with HBSS centrifugally, each time for 10 min at 260 G, and then further washed centrifugally with Eagle's MEM for 10 min at 180 G. After discarding the supernatant solution, the remaining lymphocytes were dispersed in Eagle's MEM at a concentration of the cells of 5 to $10 \times 10^6$ cells/ml.

The thus obtained two ml of specimen suspended in Eagle's MEM were subjected to electrophoretic examination by a method of fully automatic determination using a PQ-II under conditions of dark-field illumination, an object lens of 25 magnifications and an electrophoretic current of 10 mA to obtain the results spelled out by a printer as the histogram and the average mobility of the lymphocytes.

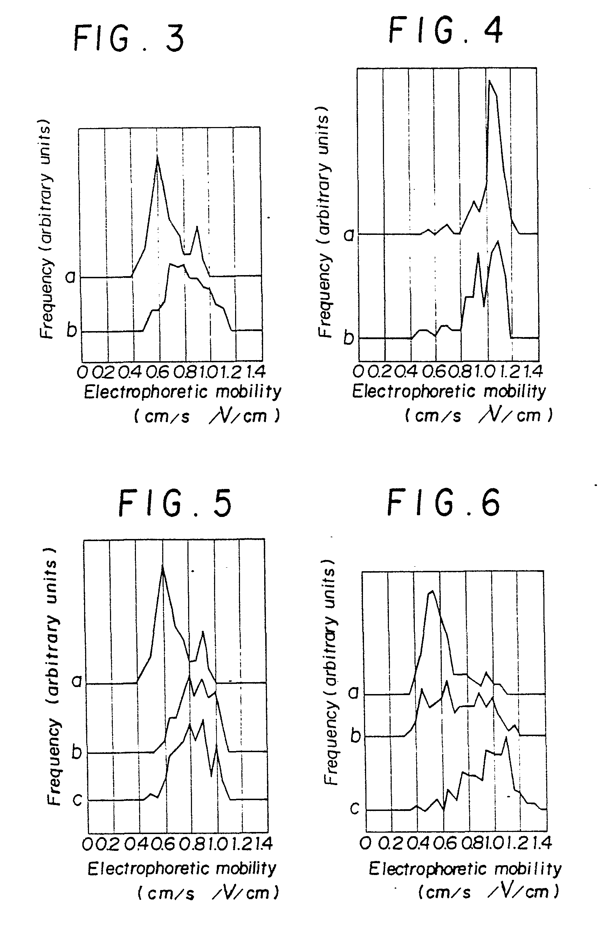

According to the same procedures, the thymocytes and the peripheral lymphocytes of normal mouse of the same strain were examined. The histograms a and b in Figure 3 of the accompanying drawings are the electrophoretic patterns of the thymocytes from the normal mouse and the tumor-bearing mouse, respectively, and those of a and b in Figure 4 of the accompanying drawings are the electrophoretic patterns of the peripheral lymphocytes from the normal mouse and the tumor-bearing mouse, respectively.

As seen in Figure 3 a, the electrophoretic pattern of the thymocytes of the normal mouse shows a two-peaked pattern with a larger peak at a mobility of 0.6 cm/s/V/cm and a smaller peak at a mobility of 0.9 cm/s/V/cm, while that of the tumor-bearing mouse shows a pattern with a broadened peak of a mobility which shifted toward the higher mobility as seen in Figure 3 b.

Also, the electrophoretic pattern of the peripheral lymphocytes of the tumor-bearing mouse (in Figure 4 b) shows a broader peak pattern and the fraction of lymphocytes with lower mobility to the total number of lymphocytes increases as compared to those of the normal mouse (in Figure 4 a).

Example 2

8 Days after transplanting $5 \times 10^6$ cells of Sarcoma-180 or Ehrlich's tumor intraperitoneally, into an 8 week old female ICR mouse, the thymocytes were collected from the mouse as in Example 1, and subjected to electrophoretic examination under the same conditions as in Example 1 to obtain the results shown in, referring to the accompanying drawings, Figure 5, b (Sarcoma-180) and c (Ehrlich's tumor) with the result obtained from the normal mouse shown in Figure 5 a.

As seen in Figure 5, the electrophoretic patterns of the thymocytes of tumor-bearing animal (b and c in Figure 5) show respectively, a broad peak and the fraction of lymphocytes with a higher mobility increases as compared to the patterns of that of the normal mouse.

Example 3

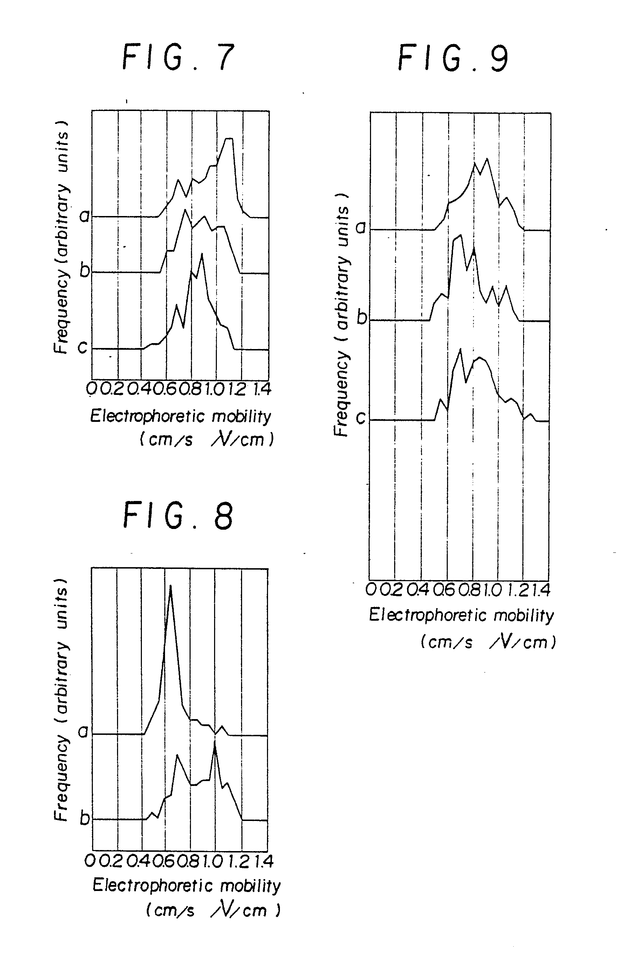

After intraperitoneally transplanting $1 \times 10^6$ cells of MH-134 tumor or MM-102 tumor into a male C3H/He mouse in its 8th week after birth, the thymocytes and the peripheral lymphocytes were collected from the mouse (on the sixth day after transplantation of MH-134 tumor cells, and on the eighth day after transplantation of MM-102 tumor cells) as in Example 1, and subjected to electrophoretic examination as in Example 1 to obtain the results shown in Figures 6 and 7 of the accompanying drawings wherein the electrophoretic patterns a, b and c are those, respectively, of the normal mouse, the mouse with the MH-134 tumor and the mouse with the MM-102 tumor.

As seen from the patterns, the tendency of alterations appearing in the patterns for the tumor-bearing mice as compared to the pattern for the normal mouse was the same as in Example 1.

Example 4

After transplanting $1 \times 10^6$ cells of Lewis lung cancer, Ca-755 tumor or B-16 tumor intraperitoneally into a male C57BL/6 mouse in its 8th week after birth, the thymocytes and the peripheral lymphocytes of the mouse were collected on the 9th day and on the 15th day after transplantation, respectively, as in Example 1, and subjected to electrophoretic examination as in Example 1. The results are shown in Figures 8 and 9 of the accompanying drawings together with the results of the same examination on the normal mouse. Pattern a in Figure 8 is that of the thymocytes of the normal mouse and pattern b in Figure 8 is that of the Lewis lung tumor-bearing mouse, and patterns a, b, and c in Figure 9 are those of the peripheral lymphocytes of the normal mouse, the Ca-755 tumor-bearing mouse and the B-16 tumour-bearing mouse, respectively.

The same tendency was observed in Figures 8 and 9 as in Example 1.

Example 5

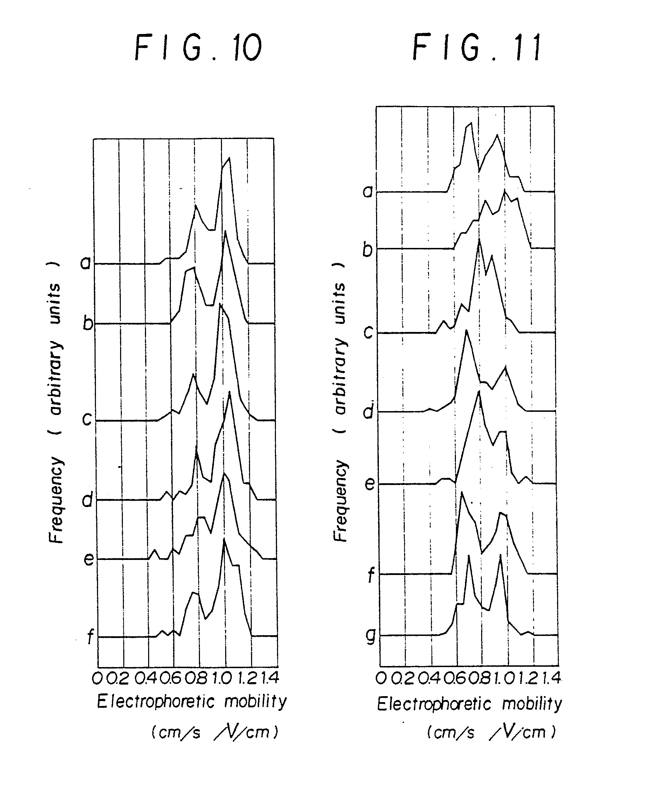

Six specimens of human lymphocytes were prepared from six peripheral blood specimens taken from a man of age 35 (a), a man of age 30 (b), a woman of age 25 (c), a woman of age 18 (d), a man of age 19 (e) and a woman of age 40 (f) in respective injectors containing an aqueous solution containing sodium heparin in an amount of 2.5 unit per ml of the blood, as in Example 1. After suspending each specimen of lymphocytes in Eagle's MEM at a concentration of 5 to $10 \times 10^6$ cells/ml, each suspension was examined electrophoretically as in Example 1. The results are shown in Figure 10 of the accompanying drawings as six electrophoretic patterns.

As are seen in Figure 10, all six specimens of human peripheral lymphocytes showed nearly the same electrophoretic patterns comprising two conspicuous peaks at the respective mobilities of about 0.8 and about 1.0 cm/s/V/cm.

Example 6

As in Example 5, seven specimens of human peripheral lymphocytes were taken from a male patient of colonal cancer of age 49 (a), a male patient of rectal cancer of age 68 (b), a male patient of stomach cancer of age 72 (c), a female patient of breast cancer of age 50 (d), a male patient of recurring esophageal cancer of age 49 (e), a female patient of recurring breast cancer of age 50 (f) and a male patient of recurring pancreatoncus of age 62 (g) as in Example 5. After suspending in Eagle's MEM, the specimens were examined electrophoretically as in Example 5. The results are shown in Figure 11 of the accompanying drawings as electrophoretic patterns a to g corresponding to the letters of the respective patients.

As are seen in the patterns as compared to the patterns in Figure 10 obtained from normal persons, the peak of the lymphocytes having lower mobility became higher (showing the increased number of the lymphocytes with the lower mobility) than that of normal persons, and the whole pattern showed some disturbance.

**Claims**

1. A method for examining lymphocytes in which the lymphocytes to be examined are taken from peripheral blood or lymphatic tissues of a human or animal and the electrophoretic mobility of the lymphocytes is compared with that of lymphocytes of a standard; characterised in that the lymphocytes to be examined are suspended in a medium corresponding to physiological conditions at a cell concentration of 0.5 to $20 \times 10^6$ per ml of an ionic strength of 0.11 to 0.21 and the electrophoretic mobility of these lymphocytes is measured, directly on the suspension thereof thus-prepared, by an automatic electrophoresis apparatus.

2. A method according to claim 1, wherein the lymphocytes are taken from the thymus spleen or lymph nodes of a human or animal.

3. A method according to claim 1 or 2, wherein the said ionic strength is from 0.13 to 0.17.

4. A method according to any one of the preceding claims, wherein the fraction of lymphocytes having an electrophoretic mobility within a predetermined range with respect to the total number of lymphocytes under examination is measured.

5. A method according to claim 4 wherein the increase in the fraction of peripheral lymphocytes having an electrophoretic mobility lower than a predetermined value is determined.

6. A method according to any one of claims 1 to 3, wherein an average electrophoretic mobility of lymphocytes having an electrophoretic mobility within a predetermined range is measured.

7. A method according to claim 4 or 6, wherein the increase of the fraction of thymocytes having an electrophoretic mobility higher than a predetermined value is determined.

8. A method according to any one of claims 1 to 3, wherein the electrophoretic mobility of a peak in the pattern that is obtained is measured.

**Patentansprüche**

1. Verfahren zur Untersuchung von Lymphozyten, bei dem die zu untersuchenden Lymphozyten von peripherem Blut oder Lymphgeweben eines Menschen oder eines Tieres entnommen werden und die elektrophoretische Beweglichkeit der Lymphozyten mit der von Lymphozyten eines Standards verglichen wird, dadurch gekennzeichnet, daß die zu untersuchenden Lymphozyten in einem Medium entsprechend der physiologischen Bedingungen bei einer Zellkonzentration von 0,5 bis $20 \times 10^6$ pro ml und einer Ionenstärke von 0,11 bis 0,21 suspendiert werden und die elektrophoretische Mobilität dieser Lymphozyten gemessen wird, direkt auf ihrer so hergestellten Suspension durch eine automatische Elektrophorese-Vorrichtung.

2. Verfahren nach Anspruch 1, worin die Lymphozyten aus der Thymusdrüse, der Milz oder den Lymphknoten eines Menschen oder eines Tieres entnommen werden.

3. Verfahren nach Anspruch 1 oder 2, worin die Ionenstärke von 0,13 bis 0,17 beträgt.

4. Verfahren nach einem der vorstehenden Ansprüche, worin die Fraktion der Lymphozyten mit einer elektrophoretischen Beweglichkeit innerhalb eines bestimmten Bereiches bezüglich der Gesamtzahl der Lymphozyten in der Untersuchung gemessen wird.

5. Verfahren nach Anspruch 4, worin die Vergrößerung in der Fraktion der peripheren Lymphozyten mit einer elektrophoretischen Beweglichkeit niedriger als der vorbestimmte Wert bestimmt wird.

6. Verfahren nach einem der Ansprüche 1 bis 3, worin eine durchschnittliche elektrophoretische Beweglichkeit von Lymphozyten mit einer elektrophoretischen Beweglichkeit innerhalb eines bestimmten Bereiches gemessen wird.

7. Verfahren nach Anspruch 4 oder 6, worin die Vergrößerung der Fraktion von Thymozyten mit einer elektrophoretischen Beweglichkeit größer als der vorbestimmte Wert bestimmt wird.

8. Verfahren nach einem der Ansprüche 1 bis 3, worin die elektrophoretische Beweglichkeit eines Höchstwertes in dem Schema, das erhalten wird, gemessen wird.

**Revendications**

1. Un procédé pour l'examen des lymphocytes dans lequel les lymphocytes à examiner sont prélevés dans le sang périphérique ou les tissus lymphatiques d'un être humain ou d'un animal et la mobilité électrophorétique des lymphocytes est comparée à celle de lymphocytes d'un étalon; caractérisé en ce que les lymphocytes à examiner sont mis en suspension dans un milieu correspondant aux conditions physiologiques à une concentration des cellules de 0,5 à $20\times10^6$/ml et une force ionique de 0,11 à 0,21 et la mobilité électrophorétique de ces lymphocytes est mesurée, directement sur leur suspension ainsi préparée, avec un appareil d'électrophorèse automatique.

2. Un procédé selon la revendication 1 dans lequel les lymphocytes proviennent du thymus, de la rate ou des ganglions lymphatiques d'un sujet humain ou d'un animal.

3. Un procédé selon la revendication 1 ou 2 dans lequel ladite force ionique est de 0,13 à 0,17.

4. Un procédé selon l'une quelconque des revendications précédentes dans lequel la fraction des lymphocytes ayant une mobilité électrophorétique comprise dans une gamme prédéterminée relativement au nombre total des lymphocytes examinés est mesurée.

5. Un procédé selon la revendication 4 dans lequel l'accroissement de la fraction des lymphocytes périphériques ayant une mobilité électrophorétique inférieure à une valeur prédéterminée est déterminé.

6. Un procédé selon l'une quelconque des revendications 1 à 3 dans lequel une mobilité électrophorétique moyenne des lymphocytes ayant une mobilité électrophorétique dans une gamme prédéterminéee est mesurée.

7. Un procédé selon la revendication 4 ou 6 dans lequel l'accroissement de la fraction des thymocytes ayant une mobilité électrophorétique supérieure à une valeur prédéterminée est déterminé.

8. Un procédé selon l'une quelconque des revendications 1 à 3 dans lequel la mobilité électrophorétique d'un pic du profil obtenu est mesurée.

0 070 153

# FIG. 1

# FIG. 2

(1)

(2)

(3)

(4)

2

0 070 153

FIG. 3

FIG. 4

FIG. 5

FIG. 6

Frequency (arbitrary units)

Electrophoretic mobility

( cm/s /V/cm )

## FIG. 7

## FIG. 8

## FIG. 9

# F I G . 10

# F I G . 11

Figure 10: Frequency (arbitrary units) vs Electrophoretic mobility (cm/s /V/cm), curves a–f

Figure 11: Frequency (arbitrary units) vs Electrophoretic mobility (cm/s /V/cm), curves a–g